# EUROPÄISCHE PATENTANMELDUNG

(11) **EP 4 574 126 A1**
(43) Veröffentlichungstag der Anmeldung: **25.06.2025**
(21) Anmeldenummer: 24220031.9
(22) Anmeldetag: 16.12.2024
(51) Int. Cl.: A61G 17/007, B32B 1/00

(54) **BIOLOGISCH ABBAUBARER LEICHENSACK**

(30) Priorität: 18.12.2023 DE 202023107489 U
(71) Anmelder: Berg, Simone, 89077 Ulm (DE)
(72) Erfinder: Berg, Simone, 89077 Ulm (DE)
(74) Vertreter: Kimpfbeck, Thomas

(57) **Zusammenfassung**

Es wird ein biologisch abbaubarer Leichensack (100; 200; 500) zur sarglosen Bestattung vorgeschlagen. Derselbe umfasst einer Hülle (102) zum Umhüllen einer verstorbenen Person und einem Verschluss (104), der an der Hülle angeordnet ist und zeichnet sich dadurch aus, dass die Hülle (102) ein Textilmaterial umfasst, wobei das Textilmaterial Cellulose und/oder Kraftpapier (704) umfasst. Ferner wird eine Verwendung von Kraftpapier, imprägnierter Cellulose und/oder wachsimprägnierter Baumwolle für einen Leichensack (100; 200; 500) und eine Verwendung von wenigstens zwei Schichten Kraftpapier und natürlichem Wachs als Haft- und Abdichtmittel für den Leichensack (100; 200; 500) vorgeschlagen.

## Beschreibung

### TECHNISCHES GEBIET

Die vorliegende Erfindung betrifft einen biologisch abbaubaren Leichensack zur sarglosen Bestattung, eine Verwendung von Kraftpapier für einen Leichensack und eine Verwendung von wenigstens zwei Schichten Kraftpapier für einen Leichensack.

### STAND DER TECHNIK

Ein Leichensack, auch bekannt als Leichenhülle, Leichenbeutel oder Bestattungssack, ist ein spezielles Behältnis, das verwendet wird, um den Körper einer verstorbenen Person vorübergehend zu umhüllen oder zu transportieren. Der Zweck eines Leichensacks besteht darin, die Würde des Verstorbenen zu wahren, eine sichere Handhabung während des Transports zu gewährleisten und die Ausbreitung von Kontaminationen zu verhindern.

Die Leichensäcke sind in der Regel aus langlebigen Materialien wie Kunststoff oder Polyethylen gefertigt und können in verschiedenen Größen und Ausführungen erhältlich sein, um den unterschiedlichen Anforderungen gerecht zu werden. Sie verfügen oft über eine Verschlussmöglichkeit wie einen Reißverschluss, einen Klettverschluss oder eine andere Art von Versiegelung, um den Körper sicher im Sack zu halten.

Leichensäcke sind für den Umgang mit Verstorbenen bestimmt, um eine respektvolle und ethische Verwendung sicherzustellen. In vielen Ländern gibt es gesetzliche Bestimmungen und Vorschriften, die den Umgang mit Leichen und Bestattungsprodukten, einschließlich Leichensäcken, regeln, um die Würde und Integrität der Verstorbenen zu wahren.

Es gibt verschiedene Arten von Leichensäcken, die üblicherweise für den Transport oder die Aufbewahrung von Verstorbenen verwendet wurden. Die bekanntesten Typen sind:
Einweg-Leichensäcke: Diese Säcke bestehen aus langlebigen Materialien wie Kunststoff oder Polyethylen und sind so konzipiert, dass sie nur einmal verwendet werden. Sie sind oft mit Reißverschlüssen oder Klettverschlüssen verschließbar.

Mehrweg-Leichensäcke: Im Gegensatz zu Einweg-Leichensäcken sind Mehrweg-Leichensäcke aus strapazierfähigeren Materialien wie Polyester oder Nylon gefertigt und können mehrfach verwendet werden, nachdem sie gereinigt wurden. Sie bieten eine umweltfreundlichere Alternative zu Einweg-Leichensäcken.

Kühlsäcke: Diese speziellen Säcke werden verwendet, um Verstorbene zu kühlen und ihre Körper aufrechtzuerhalten, wenn keine Kühlräume oder Leichenhäuser verfügbar sind.

Kombinierte Leichenhülle und Trage: Manche Leichensäcke sind mit integrierter Tragemöglichkeit ausgestattet, um den Transport der verstorbenen Person zu erleichtern.

Aus der Patentschrift TWI 805419 B ist eine multifunktionale Tragetaschenstruktur für Bergungszwecke bekannt. Diese bekannte Tragetaschenstruktur umfasst einen Leichensack, der insgesamt aus einem oberen Teil, einem linken unteren Teil und einem rechten unteren Teil besteht. Die Vorderseite des oberen Teils des Leichensacks ist mit einer C-förmigen Öffnung versehen. Der Leichensack hat mehrere Tragegurte. Die multifunktionale Tragetaschenstruktur umfasst desweiteren Teleskopstangen.

Aus der Patentschrift KR 102127317 B1 ist Leichentuch bekannt. Dieses bekannte Leichentuch, ist aus Viskosestoff unter Verwendung von Kräutern hergestellt. Der Viskosestoff umfasst: einen ersten Faden, der aus einem Viskosestoffgarn aus Kräutern hergestellt ist; einen zweiten Faden, der aus einem Baumwollgarn hergestellt ist; und ein Schussgarn, das das Viskosestoffgarn aus Kräutern enthält.

Aus der Patentschrift US 9486380 B ist leichter, absorbierender Leichensack bekannt. Dieser bekannte Leichensack ist tragbar und wegwerfbar. Der Leichensack hat ein Trägersubstrat, einen absorbierenden Körper, eine Abdeckung mit einer wiederverschließbaren Klappe, die geöffnet und geschlossen werden kann, damit ein Körper in den Leichensack gelegt und aus ihm entfernt werden kann, und Greifvorrichtungen entlang der Kanten, um einen einfachen Transport zu ermöglichen. Eine thermische Versiegelung kann kontinuierlich entlang eines Umfangs des Leichensacks angebracht werden, um ein wasserdichtes Körperabteil zu schaffen. Ferner ist ein Wirkstoff offenbart, der den Geruch des Körpers des Verstorbenen und das Risiko einer Kontamination durch Blut und andere Körperflüssigkeiten, die vom Körper ausgeschieden werden, verringert. Der Leichensack ist ein Einwegartikel und besteht aus einem biologisch abbaubaren absorbierenden oder superabsorbierenden Material, nämlich ein Material auf Stärkebasis. Ferner sind als Material für den Leichensack Nylon, Nylon einschließlich Verbundmaterial, behandeltes Nylon, Stoff, behandeltes Tuch, Segeltuch, Hanf, Flachs, Baumwollfasermaterialien, Polyethylen, Polypropylen, Polyester, Polymerfolie und Kombinationen davon offenbart.

### AUFGABE

Somit besteht die Aufgabe der Erfindung darin einen stabilen, reißfesten und auslaufsicheren Leichensack zur Verfügung zu stellen, der gleichzeitig zur sarglosen Bestattung geeignet ist.

### OFFENBARUNG DER ERFINDUNG

Der erfindungsgemäße biologisch abbaubarer Leichensack zur sarglosen Bestattung ist gemäß Anspruch 1 ausgestaltet. Insbesondere umfasst der biologisch abbaubarer Leichensack eine Hülle zum Umhüllen einer verstorbenen Person und einen Verschluss, der an der Hülle angeordnet ist. Die Hülle zeichnet sich im Wesentlichen dadurch aus, dass sie ein Textilmaterial umfasst, wobei das Textilmaterial Cellulose und/oder Kraftpapier umfasst.

Der Begriff Bestattung umfasst dabei im Wesentlichen eine Erdbestattung.

Kraftpapier ist im Wesentlichen eine Papiersorte mit hoher Festigkeit zur Herstellung von z. B. Papiersäcken, Schmirgelpapieren oder Einkaufstüten. Es besteht zu beinahe 100 % bzw. im Wesentlichen aus Zellstofffasern. Teilweise können Kraftpapier Stärke, Alaun und Leim zugesetzt werden, um Oberflächeneffekte und Festigkeitssteigerungen zu erzielen.

Gemäß einer Weiterbildung kann die Hülle des biologisch abbaubaren Leichensacks wenigstens zwei oder drei oder vier Schichten aus dem Textilmaterial umfassen. Vorzugsweise umfasst die Hülle zwei, drei oder mehr Schichten Kraftpapier. Kraftpapier kann bei Beanspruchung reißen. Mehrere Schichten Kraftpapier können ein Reißen verringern oder verhindern.

Die wenigstens zwei Schichten aus dem Textilmaterial bzw. wenigstens zwei Kraftpapierschichten können mittels eines biologischen Klebstoffs verbunden sein. Ferner können die wenigstens zwei Schichten aus dem Textilmaterial bzw. wenigstens zwei Kraftpapierschichten miteinander vernäht sein. Der biologische Klebstoff umfasst insbesondere Mais, Kartoffelstärke und Wasser.

Die Hülle kann mehrere Abschnitte umfassen, insbesondere einen Bodenabschnitt, einen Deckelabschnitt, der dem Bodenabschnitt parallel gegenüberliegt, einen ersten Seitenabschnitt, einen zweiten Seitenabschnitt, der dem ersten Seitenabschnitt parallel gegenüberliegt, einen Fußabschnitt, einen Kopfabschnitt, der dem Fußabschnitt parallel gegenüberliegt. Im wesentlichen umfasst die Hülle Abschnitte eines quaderähnlichen Raumkörpers. Der Bodenabschnitt kann vier Schichten aus dem Textilmaterial umfassen. Der Bodenabschniit ist meist stark belastet, deshalb keine hohe Anzahl Schichten für Stabilität sorgen. Der Deckelabschnitt kann zwei Schichten aus dem Textilmaterial umfassen. In einer weiteren Ausgestaltung können der Kopf-, Fuß-, erste und/oder zweiten Seitenbereich eine Falte aufweisen. Die Falte kann ziehharmonika-artig ein- und ausfalten. Die Falte bewirkt vorzugsweise eine Volumenanpassung für den Leichensack, um an verschiedene Leichengrößen flexibel anpassbar zu sein. Vorzugsweise weist die Falte zwei Schichten aus dem Textilmaterial auf.

Cellulose ist im Allgemeinen eine organische Verbindung und ein Bestandteil von pflanzlichen Zellwänden. Cellulose ist in Wasser nahezu unlöslich. Dies macht die Cellulose z.B. resistent gegenüber Wasser- bzw. Flüssigkeitsbeeinträchtigung. Nach dem Tod einer Person treten üblicherweise folgende Umstände ein, die einen Leichensack beeinträchtigen können: nach 24 bis 72 Stunden setzt eine Verwesung ein, es kommt zu Geruchsbildung und der Körper der Person verliert Flüssigkeit. Die Cellolose hält der Flüssigkeit vorzugsweise stand bzw. hält dicht. Dennoch ist die Cellose biologisch abbaubar. In machen Religionen kann eine sarglose Bestattung vorgeschrieben sein. So kann die verstorbene Person vorteilhaft in dem erfindungsgemäßen biologisch abbaubarer Leichensack transportiert und anschließend sarglos darin bestattet werden.

Gemäß einer Ausführung kann das Textilmaterial Baumwolle umfassen. Vorzugsweise kann die Baumwolle eine fluidsaugfähige Schicht bilden. Die fluidsaugfähige Schichtist ist im Allgemeinen zwischen den zwei Schichten aus Textilmaterial angeordnet. Der Bodenabschnitt umfasst vorzugsweise eine innere erste Schicht aus Kraftpapier, ein Baumwollvlies als zweite Schicht und eine dritte, vierte und fünte Schicht aus Kraftpapier. Die fünf Schichten können mit einem biologisch abbaubaren Klebstoff verbunden sein. Zusätzlich können die fünf Schichten miteinander vernäht sein.

In einer weiteren Ausgestaltung kann das Textilmaterial eine flüssigkeitsabdichtende und/oder gasabdichtende Beschichtung und/oder flüssigkeitsabdichtende und/oder gasabdichtende Imprägnierung umfassen. Die flüssigkeitsabdichtende und/oder gasabdichtende Beschichtung und/oder Imprägnierung verbessert im Wesentlichen die Flüssigkeitsabdichtung und/oder die Gasabdichtung des Leichensacks. Dadurch kann ein Austreten von Flüssigkeiten oder Gerüchen aus dem Leichensack verringert oder reduziert werden. Die Beschichtung und/oder die Imprägnierung umfasst vorzugsweise Wachs. Noch bevorzugter umfasst die Beschichtung und/oder Imprägnierung natürliches Wachs. Natürliches Wachs ist im Allgemeinen ein Stoffgemisch und zählt zu den Lipiden. Der Begriff natürliches Wachs umfasst beispielsweise Stearin, Wollwachs, Chinawachs und/oder Bienenwachs., Wachs ist im Allgemeinen biologisch abbaubar.

Vorzugsweise weist eine innere Schicht aus dem Textilmaterial die Imprägnierung auf. Ferner kann die eine äußere Schicht aus dem Textilmaterial die Imprägnierung umfassen. Insbesondere können alle Abschnitt der Hülle die Imprägnierung aufweisen.

Vorzugsweise wirkt die flüssigkeitsabdichtende und/oder gasabdichtende Beschichtung und/oder flüssigkeitsabdichtende und/oder gasabdichtende Imprägnierung als ein Haftmittel zwischen den wenigstens zwei Schichten. Beispielsweise bilden eine Schicht aus Kraftpapier, eine zweite Schicht aus Wachs und eine dritte Schicht aus Kraftpapier ein Sandwich, das im Wesentlichen reißfest und flüssigkeitsdicht und gasdicht ist.

In einer weiteren Ausgestaltung kann die Beschichtung und/oder die Imprägnierung ein Insektizied umfassen. Das Insektizid kann die bei Verwesung auftretenden Insekten verringern oder vermeiden und dadurch der Verwesung entgegenwirken oder sie aufhalten.

Gemäß einer Weiterbildung umfasst der Verschluss des erfindungsgemäßen biologisch abbaubaren Leichensacks vorzugsweise ein biologisch abbaubares Material. Das abbaubare Material umfasst z.B. biologisch abbaubaren Kunststoff.

Der Verschluss kann einen fluiddichten Reißverschluss umfassen. Noch bevorzugter umfasst der Verschluss einen biologisch abbaubaren Reißsverschluss. Der biologisch abbaubare Reißverschluss umfasst vorzugsweise biologisch abbaubaren Kunststoff. Der biologisch abbaubare Reißverschluss kann insbesondere nach fünf Jahren biologisch abgebaut bzw. zersetzt sein. Der Verschluss kann einen Klettverschluss umfassen. Der Klettverschluss kann mittels Schmelzklebstoff an der Hülle befestigt werden.

Gemäß einer weiteren Ausgestaltung kann der Verschluss eine Lasche mit einem ersten Klebestreifen umfassen. Vorzugsweise ist die Hülle Briefkuver-artig ausgelegt und weist eine Briefkuvert-artige Lasche auf, um die Hülle zu offenen oder zu schließen. Der erste Klebestreifen kann eingesetzt werden, um die Hülle fluiddicht zu verschließen. Der Klebestreifen kann mit einem Klebeschutzstreifen abnehmbar bedeckt sein, um versehentliches Kleben zu verhindern.

Gemäß einer Weiterbildung kann die Lasche einen zweiten Klebestreifen umfassen. Ist ein Öffnen des Leichensacks nach einem ersten Verschließen mit dem ersten Klebenstreifen erforderlich, etwa bei einer Leichenschau, so kann ein Teil der Lasche abgetrennt werden. Soll der Leichensack erneut fluiddicht verschlossen werden, so kann der zweite Klebestreifen eingesetzt werden, um den Leichensack ein zweites Mal fluiddicht zu verschließen.

In einer weiteren Ausgestaltung kann der erfindungsgemäße biologisch abbaubare Leichensack ein absorbierendes Material, insbesondere Aktivkohle, umfassen, um den Inhalt des biologisch abbaubaren Leichensacks trocken und geruchsarm zu halten. Aktivkohle, auch bekannt als Aktivkohlenstoff oder medizinische Kohle, ist im Wesentlichen ein poröses Material, das durch die Aktivierung von Kohlenstoff hergestellt wird. Es hat im Allgemeinen eine hohe Oberfläche und kann verwendet werden, um Verunreinigungen und Toxine aus Gasen, Flüssigkeiten oder festen Stoffen zu adsorbieren, indem es sie an seiner Oberfläche bindet.

Die erfindungsgemäße Verwendung von Kraftpapier, imprägnierter Cellulose und/oder wachsimprägnierter Baumwolle für eine Leichensack ist in Anspruch 20 angegeben. Die erfindungsgemäße Verwendung von wenigstens zwei Schichten Kraftpapier und natürlichem Wachs als Haft- und Abdichtmittel für einen Leichensack ist in Anspruch 21 angegeben.

### KURZBESCHREIBUNG DER ZEICHNUNGEN

Ausführungsbeispiele der Erfindung werden anhand der Zeichnungen und der nachfolgenden Beschreibung näher erläutert. Es zeigen:
Figur 1 ein Ausführungsbeispiel eines erfindungsgemäßen Leichensacks,
Figur 2 ein weiteres Ausführungsbeispiel eines erfindungsgemäßen Leichensacks,
Figur 3 ein Ausführungsbeispiel einer Transportverstärkung,
Figur 4 ein weiteres Ausführungsbeispiel einer Transportverstärkung,
Figur 5 ein weiteres Ausführungsbeispiel einer Transportverstärkung
Figur 6 ein Ausführungsbeispiel einer erfindungsgemäßen Tragevorrichtung und
Figur 7 ein weiteres Ausführungsbeispiel eines erfindungsgemäßen Leichensacks.

### AUSFÜHRUNGSFORMEN DER ERFINDUNG

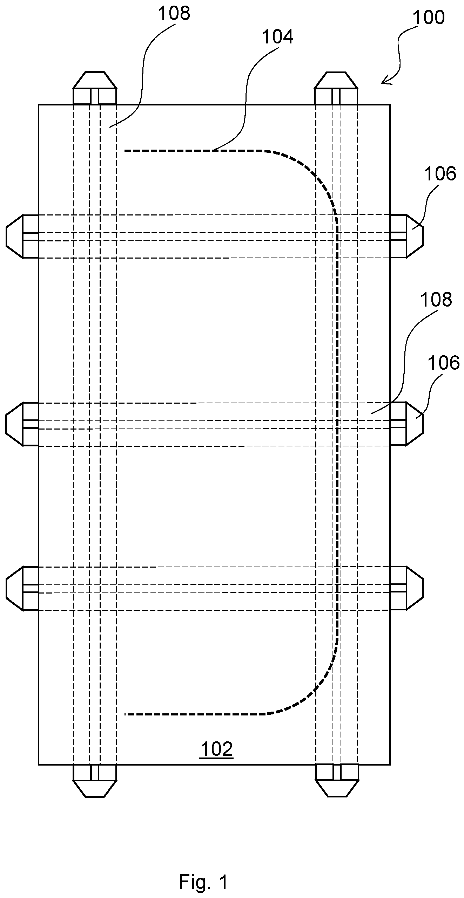

In der Figur 1 ist ein Leichensack 100 gezeigt. Der Leichensack 100 bildet den erfindungsgemäßen Leichensack zum Umhüllen und Transportieren einer verstorbenen Person. Der Leichensack 100 weist eine Hülle 102 Hülle zum Umhüllen eines Leichnames bzw. einer verstorbenen Person und einem fluiddichten Reißverschluss 104 auf, der an der Hülle 102 angeordnet ist und biologisch abbaubaren Kunststoff umfasst. Die Hülle 102 besteht ausschließlich oder zu einem Anteil von wenigstens 90% aus Kraftpapier oder Baumwolle. Das Kraftpapier bzw. die Baumwolle ist mit Wachs imprägniert, um fluiddicht zu sein.

Ferner weist der Leichensack 100 mehrere Schlaufen 106 auf, die Enden von Gurtbändern 108 bilden. Die Schlaufen 106 bilden Transportverstärkungs-Befestigungsvorrichtungen. Die Gurtbänder 108 sind längs und quer an einer Unterseite des Leichensacks 100 angeordnet und mit der Hülle 102 sowie an Kreuzungspunkten miteinander vernäht. Die Gurtbänder 108 bilden eine Transportverstärkung bzw. ein Transportnetz.

Die Gurtbänder 108 bewirken eine Erhöhung der Reißfestigung und erleichtern den Transport des Leichensacks 100. Das Kraftpapier bzw. die Wachs-imprägnierte Baumwolle bewirken eine Fluiddichtigkeit bzw. eine Auslaufsicherheit des Leichensacks 100. Alle Materialien bzw. der Überwiegenden Teil der Kompononenten des Leichensacks 100 sind biologisch abbaubar, sodass sich der Leichensack 100 für eine sarglose Erdbestattung eignet. Die Gurtbänder 108 umfassen Bambusfasern. Die Schlaufen 106 umfassen Bambusfasern.

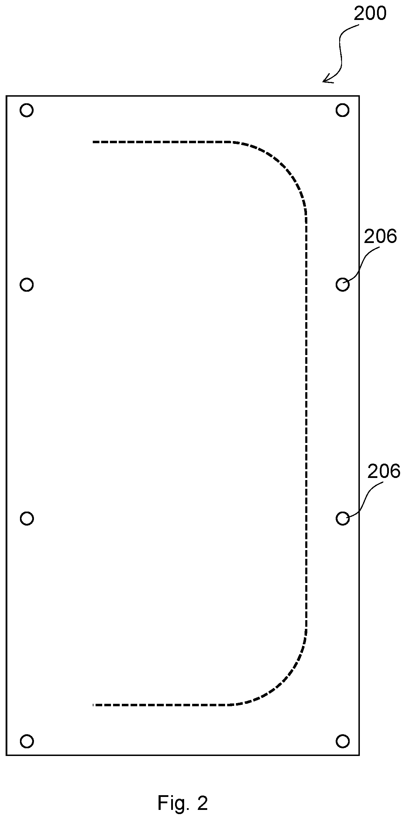

In der Figur 2 ist ein Leichensack 200 gezeigt. Der Leichensack 200 Ösen 206 auf, die Transportverstärkungs-Befestigungsvorrichtungen bilden. Die Ösen 206 sind an Seitenrändern des Leichensacks 200 angeordnet und dienen zur Befestigung eines Transportgestänges zur Verbesserung der Stabilität und Reißfestigkeit des Leichensacks 200.

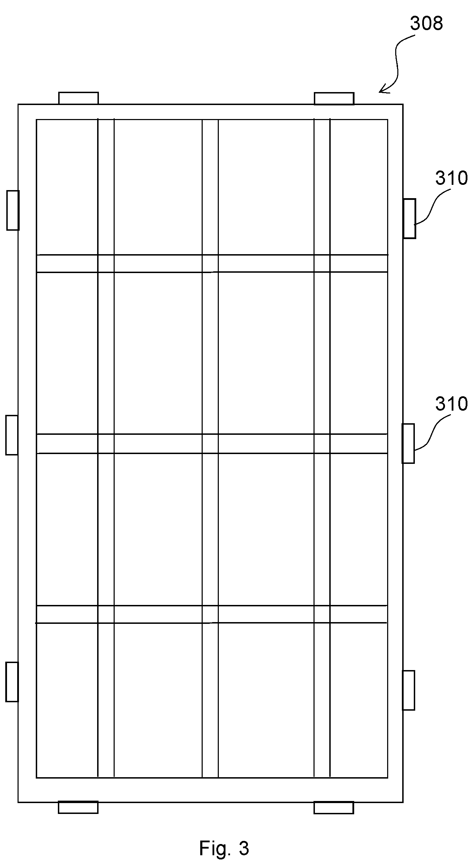

In der Figur 3 ist eine Transportverstärkung 308 gezeigt. Die Transportverstärkung 308 weißt eine lattenrostartigen Anordnung von Tragelementen auf, auf denen ein Leichensack angeorndet und transportiert werden kann. Ferner umfasst die Transportverstärkung 308 mehrere randseitig angeordnete Haken 310. Die Haken 310 können mit Transportverstärkungs-Befestigungsvorrichtungen eines Leichensacks abnehmbar in Eingriff gebracht werden, um den Leichensack temporär auf der Transportverstärkung 308 zu befestigen und an schwer zugänglichen Orten zu transportieren.

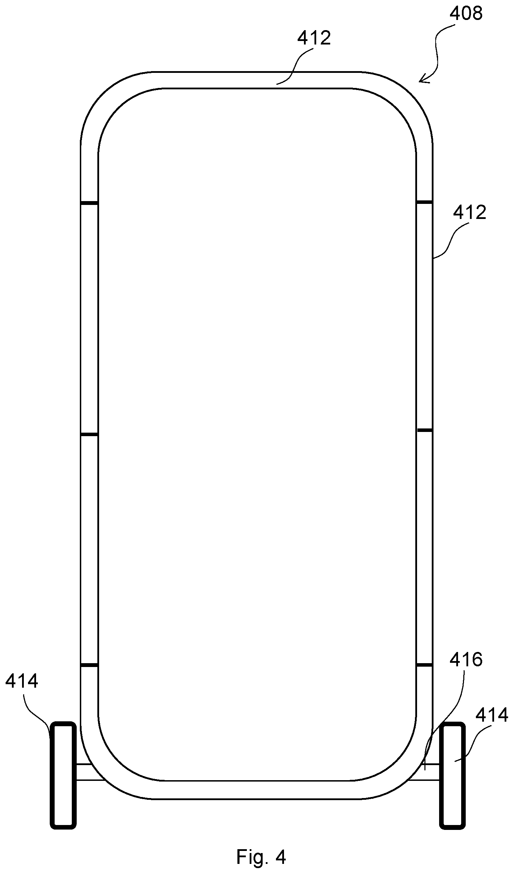

In der Figur 4 ist eine Transportverstärkung 408 gezeigt. Die Transportverstärkung 408 umfasst zeltstangenartig ineinander gesteckte Metallrohrelemente 412. Die ineinander gesteckte Metallrohrelemente 412 bilden einen geschlossenen Tragrahmen. Ferner umfasst die Transportverstärkung 408 zwei Räder 414 und eine Achse 416, die zusammen ein Fahrwerk bilden. Die Achse 416 ist an einem Metallrohrelement 412 angeordnet.

Der Tragrahmen kann mit Transportverstärkungs-Befestigungsvorrichtungen, insbesondere Ösen, eines Leichensacks abnehmbar in Eingriff gebracht werden, um den Leichensack temporär auf der Transportverstärkung 408 zu befestigen und an schwer zugänglichen Orten zu transportieren.

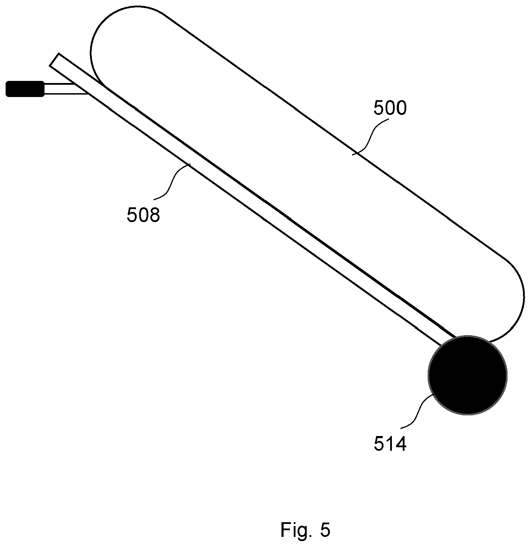

In der Figur 5 ist ein Leichensack 500 gezeigt, der auf einer sackkarrenartigen Transportverstärkung 508 angeorndet ist. Die Transportverstärkung 508 umfasst ein Rad 514, um den Leichensack an schwer zugänglichen Orten zu transportieren.

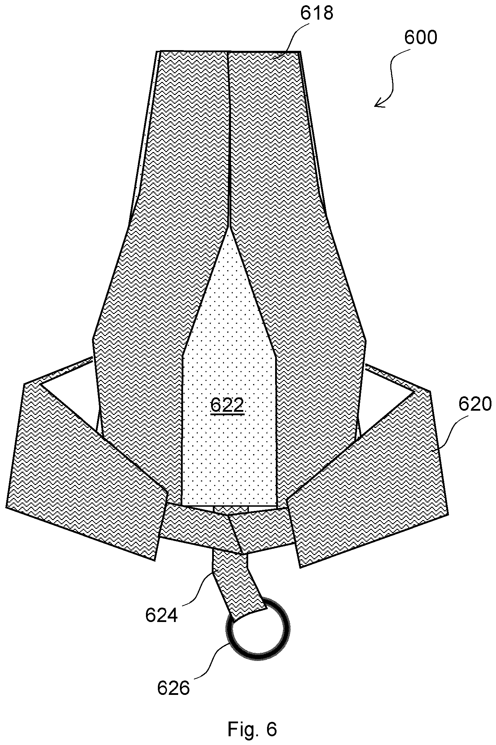

In der Figur 6 ist eine Tragevorrichtung 617 gezeigt. Die Tragevorrichtung weist ein Schultertraggeschirr 618, einen Beckengürtel 620 und ein Rückenteil 622 auf. Am Rückenteil 622 ist ein Gurtelement 624 mit einem endseitigem Ring 626 angeordnet, die zusammen einen Befestigungspunkt zum Befestigen eines Leichensacks oder einer Transportverstärkung für einen Leichensack bilden. Die Tragevorrichtung 600 ist aus desinfizierbarem Kunststoff hergestellt.

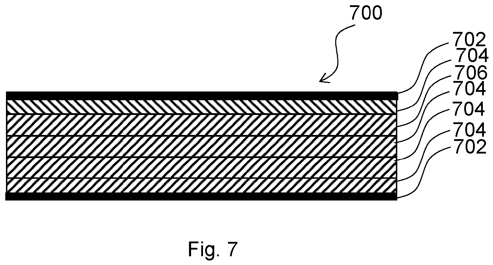

In der Figur 7 ist ein Bodenabschnitt 700 eines erfindungsgemäßen Leichensacks gezeigt. Der Bodenabschnitt weist eine mit Imprägnierstoff 702 versehene innere Kraftstoffpapierschicht 704 auf, die mit einem Leichnam in Kontakt steht. Die Imprägnierstoffschicht 702 ist weitgehend fluid- und geruchsdicht. Des weiteren weist der Bodenabschnitt 700 eine Baumwollfliesschicht 706 auf. Die Baumwollfliesschicht 706 ist saufähig, um etwaige Flüssigkeiten, die durch die innere Kraftstoffpapierschicht 704 sickern aufzufangen und zu speichern. Des weiteren umfasst der Bodenabschnitt 700 drei weitere Kraftstoffpapierschichten 704. Die insgesamt fünf Schichten sind mit einem Bioklebstoff verklebt und mit einem Faden vernäht. Der Bioklebstoff umfasst Mais, Kartoffelstärke und Wasser. Die Kraftpapierschichten 704 können Textilschichten bilden.

Gemäß eines weiteren Ausführungsbeispiels kann ein Leichensack zum Umhüllen und Transportieren einer verstorbenen Person eine Hülle zum Umhüllen der verstorbenen Person und einen Verschluss umfassen, der an der Hülle angeordnet ist. Der Leichensack umfasst vorzugsweise eine Transportverstärkungs-Befestigungsvorrichtung, um eine Transportverstärkung am Leichensack zu befestigen. Gemäß einer Weiterbildung kann die Transportverstärkung abnehmbar am Leichensack befestigt sein.

Mit dem Begriff verstorbener Person ist ein menschlicher Leichnam oder Tierkörper oder Teile davon gemeint.

In schwer zugänglichen Bereichen, wie etwa in Treppenhäusern, in unwegsamen Gelände, Schützgräben, Wanderwegen, kann das Transportieren eines gefüllten Leichensackes für einen Träger, d.h. eine Person, die den Leichensack transportiert, beschwerlich sein. Mehrere Träger haben meist keinen Platz. Der Leichensack ermöglicht die Befestigung einer Transportverstärkung bzw. Transportvorrichtung, die den Transport des Leichensacks erleichtert. Ein Integrieren bzw. baueinheitlich Auslegen einer solchen Transportverstärkung bzw.

Transportvorrichtung würde den einzelnen Leichensack verteuern. Der Leichensack erlaubt eine vorteilhafte Zweiteilung von Leichensack und Transportverstärkung. Alternativ kann der Leichensack die Transportverstärkung umfassen. Das heißt die Transportverstärkung ist z.B. in den Leichensack integriert.

In einer weiteren Ausführung kann die Transportverstärkungs-Befestigungsvorrichtung eine Schlaufe, Öse, Gurt, Klettverschluß, Haken, Druckknopf, Karabiner, Reißverschluß, oder eine Kombination daraus umfassen. Die Transportverstärkungs-Befestigungsvorrichtung ist vorzugsweise eine kostengünstige mechanische Befestigungsvorrichtung bzw. ein Beschlag, der ein leichtes Anbringen und Abmontieren der Transportverstärkung bzw. Transportvorrichtung ermöglicht. Die Transportverstärkung kann Bambusfasern umfassen. Die Transportverstärkung kann aus Bambusfasern bestehen.

In einer weiteren Ausgestaltung kann die Transportverstärkung ein Gestänge, eine Teleskopstange und/oder ein Transportnetz umfassen. Vorzugsweise kann das Gestänge aus mehreren Einzelteilen zusammengesteckt sein. Dadurch ist die Transportverstärkung insbesondere leicht transportabel und verstärkt bei Bedarf den Leichensack. Eine Verstärkung erleichtert den Transport bzw. die Handhabung des Leichensacks durch nur einen oder wenige Träger.

Der Leichensack kann außerdem ein Fahrwerk umfassen. Das Fahrwerk hat vorzugsweise wenigstens eine Achse und ein Rad. Noch bevorzugter weist das Fahrzwerk eine Achse und zwei Räder auf, um den Leichensack Sackkarrenartig zu bewegen. Das Fahrwerk kann außerdem eine Bremse umfassen. Das Rad kann als Walze bzw. Rolle ausgelegt sein. Eine Walze bzw. Rolle kann eine Kippneigung verringern und den Anpressdruck auf einen Untergrund verringern. Das Fahrwerk kann eine Federung, einen Stoßdämpfer, eine Bremse, eine Lenkung, einen elektrischen Antrieb und/oder ein Treppensteig-Rad umfassen. Das Fahrwerk kann an der Transportverstärkung angeordnet sein. Außerdem kann das Fahrwerk abnehmbar an der Transportverstärkung angeordnet sein. Die Abnehmbarkeit ermöglicht eine preisgünstige Herstellung des Leichensacks, wobei das Fahrwerk für verschiedene Einsätze wiederverwendbar ist.

Eine Tragevorrichtung kann insbesondere ein Tragegeschirr zum Anlegen am Oberkörper eines Trägers und einen Befestigungspunkt umfassen, der zum Befestigen eines Leichensacks und/oder einer Trangsportverstärkung ausgelegt ist.

In schwer zugänglichen Bereichen, wie etwa in Treppenhäusern, in unwegsamen Gelände, Schützgräben, Wanderwegen, kann das Transportieren eines gefüllten Leichensackes für einen Träger, d.h. eine Person, die den Leichensack transportiert, beschwerlich sein. Mehrere Träger haben meist keinen Platz. Die Tragevorrichtung ermöglicht einen leichteren Transport des Leichensacks. Der Leichensack hängt dabei vorzugsweise an einem Ende an der Tragevorrichtung und ist an seinem anderen Ende entweder an einer weiteren Tragevorrichtung befestigt oder mit Rollen ausgestattet. Der Träger kann mittels der Tragevorrichtung das Gewicht des Leichensacks nahe an seinen Körper verlagern und vermeidet dadurch einen gewichterhöhenden Hebel, der durch herkömmliches Tragen mit angewinkelten bzw. abgespreizten Armen entsteht. Ferner hat der Träger durch die Tragevorrichtung beide Arme frei und kann diese zum sich selbst Sichern, Festhalten und dergleichen benutzen. Ferner kann der Träger seine Arme zum Lenken bzw. Manövrieren des Leichensackes einsetzen. Die Tragevorrichtung erlaubt ferner einen rückenschonenderen Transport des Leichensacks.

Das Tragegeschirr kann ein Gurtband aus einem synthetischem Material umfassen, um abwaschbar zu sein. Beim Transport von Leichen kann es zu Verunreinigung der Ausrüstung mit Blut oder andere Stoffen kommen. Das Tragegeschirr sollte daher vorzugsweise abwaschbar bzw. desinfizierbar sein. Das synthetische Material umfasst z.B: Polyethylen, Polypropylen oder Polycarbonat. Das Tragegeschirr kann alternativ ein Gurtband aus einem biologisch abbaubaren Material umfassen, anders gesagt, das Tragegeschirr kann Bambusfasern umfassen. Alternativ kann das Gurtband Bambusfasern umfassen oder aus Bambusfasern bestehen.

Der Befestigungspunkt kann eine Schlaufe, Öse, Ring, Gurt, Klettverschluß, Haken, Druckknopf, Karabiner, Reißverschluß, oder einer Kombination daraus umfassen. Für eine kostengünstige Herstellung, leichte, insbesondere einhändige Handhabung und gute Abwaschbarkeit ist ein einfacher Befestigungemechanismus, wie die vorgenannten, bevorzugt. Des weiteren kann die Tragevorrichtung einen weiteren Befestigungspunkt zum Befestigen des Leichensacks und/oder der Transportverstärkung umfassen. Die zwei Befestigungspunkte können eine bessere Lastverteilung auf den Träger erzielen. Ferner können die zwei Befestigungspunkte ein Verdrehen des Leichensacks während des Transports verringern oder verhindern.

Gemäß eines weiteren Ausführungsbeispiels kann die Tragevorrichtung eine Transportvorrichtung zum Transportieren des Leichensacks in verstauter Form umfassen. So muss der Träger vorzugsweise den Leichensack nicht in der Hand tragen, sondern hat ein oder mehrere zusammengefaltete Leichensäcke griffbereit in der Transportvorrichtung dabei. Die Transportvorrichtung kann als Gürteltasche, Gürtelbeutel, Rucksack und/oder Brustbeutel ausgelegt und angeordnet sein. Ferner kann eine Transportverstärkung in der Transportvorrichtung transportiert werden. Insbesondere ist die Transportverstärkung zerlegbar und in der Transportvorrichtung transportierbar. Alternativ kann die Tragevorrichtung eine weitere Transportvorrichtung umfassen, die zum Transportieren der Transportvorrichtung in verstauter Form ausgelegt ist. Die Transportverstärkung kann ein Gestänge, eine Teleskopstange und/oder ein Transportnetz umfassen. Vorzugsweise kann das Gestänge aus mehreren Einzelteilen zusammengesteckt sein. Dadurch ist es insbesondere leicht transportabel und verstärkt bei Bedarf den Leichensack. Eine Verstärkung erleichtert den Transport bzw. die Handhabung des Leichensacks durch nur einen oder wenige Träger.

Gemäß eines weiteren Ausführungsbeispiels umfasst ein Leichensacksystem einen biologisch abbaubaren Leichensack, der wenigstens eine Schicht Cellulose und/oder eine Schicht Kraftpapier aufweist; eine Transportverstärkung, ein Fahrwerk und eine Tragevorrichtung.

Die Cellulose bzw. das Kraftpapier erlauben im Wesentlichen eine biologische Abbaubarkeit des Leichensacks und dadurch eine sarglose Bestattung. Ferner sind die Cellulose bzw. das Kraftpapier im Allgemeinen stabil, reißfest und auslaufsicher. Zum Erhöhen der Stabilität und Reißfestigkeit kann die Transportvorrichtung dienen. Zum leichteren Transportieren können das Fahrwerk und die Tragevorrichtung beitragen.

### BEZUGSZEICHENLISTE

100: Leichensack
102: Hülle
104: fluiddichter Reißverschluss
106: Schlaufe
108: Gurtband
200: Leichensack
206: Ösen
308: Transportverstärkung
310: Haken
408: Transportverstärkung
412: Metallrohrelemente
414: Räder
416: Achse
500: Leichensack
508: Transportverstärkung
514: Rad
617: Tragevorrichtung
618: Schultertraggeschirr
620: Beckengürtel
622: Rückenteil
624: Gurtelement
626: Ring
700 Bodenabschnitt
702 Imprägnierstoff
704 Kraftpapierschicht
706 Baumwollfliesschicht

## Patentansprüche

1. Biologisch abbaubarer Leichensack (100; 200; 500) zur sarglosen Bestattung mit einer Hülle (102) zum Umhüllen einer verstorbenen Person und
einem Verschluss (104), der an der Hülle angeordnet ist
**dadurch gekennzeichnet, dass**
die Hülle (102) ein Textilmaterial umfasst, wobei das Textilmaterial Cellulose und/oder Kraftpapier (704) umfasst.

2. Biologisch abbaubarer Leichensack (100; 200; 500) nach Anspruch 1
**dadurch gekennzeichnet, dass**
die Hülle wenigenst zwei Schichten aus dem Textilmaterial umfasst.

3. Biologisch abbaubarer Leichensack (100; 200; 500) nach Anspruch 11
**dadurch gekennzeichnet, dass**
die Hülle wenigenst drei Schichten aus dem Textilmaterial umfasst.

4. Biologisch abbaubarer Leichensack (100; 200; 500) nach Anspruch 1, wobei die Hülle einen Bodenabschnitt (700) aufweist, der vier Schichten aus dem Textilmaterial umfasst.

5. Biologisch abbaubarer Leichensack (100; 200; 500) nach Anspruch 1, wobei die Hülle einen Deckelabschnitt, der zwei Schichten aus dem Textilmaterial umfasst.

6. Biologisch abbaubarer Leichensack (100; 200; 500) nach einem der vorhergehenden Ansprüche, wobei der Verschluss (104) einen biologisch abbaubaren Reißverschluss umfasst.

7. Biologisch abbaubarer Leichensack (100; 200; 500) nach einem der vorhergehenden Ansprüche, wobei der Verschluss (104) eine Lasche mit einem ersten Klebestreifen umfasst.

8. Biologisch abbaubarer Leichensack (100; 200; 500) nach Anspruch 7, wobei die Lasche einen zweiten Klebestreifen umfasst.

9. Biologisch abbaubarer Leichensack (100; 200; 500) nach einem der vorhergehenden Ansprüche, wobei die Hülle einen Kopf-, Fuß- und/oder Seitenbereich umfasst, der eine Falte aufweist.

10. Biologisch abbaubarer Leichensack (100; 200; 500) nach Anspruch , wobei die Falte zwei Schichten aus dem Textilmaterial umfasst.

11. Biologisch abbaubarer Leichensack (100; 200; 500) nach Anspruch 1
**dadurch gekennzeichnet, dass**
das Textilmaterial Baumwolle umfasst.

12. Biologisch abbaubarer Leichensack (100; 200; 500) nach Anspruch 11
**dadurch gekennzeichnet, dass** die Baumwolle eine fluidsaugfähige Schicht (706) bildet.

13. Biologische abbaubarer Leichensack (100; 200; 500) nach einem der Ansprüche 2 bis 12 **dadurch gekennzeichnet, dass** die fluidsaugfähige Schicht (706) zwischen den zwei Schichten aus Textilmaterial angeordnet ist.

14. Biologisch abbaubarer Leichensack (100; 200; 500) nach einem der Ansprüche vorhergehenden Ansprüche
**dadurch gekennzeichnet, dass**
das Textilmaterial eine flüssigkeitsabdichtende und/oder gasabdichtende Beschichtung und/oder Imprägnierung umfasst.

15. Biologisch abbaubarer Leichensack (100; 200; 500) nach 14,
**dadurch gekennzeichnet, dass**
die flüssigkeitsabdichtende und/oder gasabdichtende Beschichtung und/oder Imprägnierung (702) als ein Haftmittel zwischen den wenigstens zwei Schichten wirkt.

16. Biologisch abbaubarer Leichensack (100; 200; 500) nach einem der Ansprüche 14 oder 15
**dadurch gekennzeichnet, dass**
die Beschichtung und/oder die Imprägnierung (702) Wachs, insbesondere natürliches Wachs, umfasst.

17. Biologisch abbaubarer Leichensack (100; 200; 500) nach nach einem der Ansprüche 14 bis 16
**dadurch gekennzeichnet, dass**
die Beschichtung und/oder die Imprägnierung (702) ein Insektizied umfasst.

18. Biologisch abbaubarer Leichensack (100; 200; 500) nach einem der vorhergehenden Ansprüche
**dadurch gekennzeichnet, dass**
der Verschluss (104) ein biologisch abbaubares Material umfasst.

19. Biologisch abbaubarer Leichensack (100; 200; 500) nach einem der verhergehenden Ansprüche
**dadurch gekennzeichnet, dass**
der Verschluss (104) einen fluiddichten Reißverschluss (104) oder einen Klettverschluss umfasst.

20. Verwendung von Kraftpapier, imprägnierter Cellulose und/oder wachsimprägnierter Baumwolle für einen Leichensack (100; 200; 500).

21. Verwendung von wenigstens zwei Schichten Kraftpapier und natürlichem Wachs als Haft- und Abdichtmittel für einen Leichensack (100; 200; 500).
